# EUROPEAN PATENT SPECIFICATION

(11) **EP 1 308 392 B1**
(45) Date of publication and mention of the grant of the patent: **20.04.2005**
(21) Application number: 01830684.5
(22) Date of filing: 06.11.2001
(51) Int. Cl.: B65D 8/00

(54) **Container for surprise gifts and similar articles and food product containing it**
Behälter für Überraschungsgeschenke und ähnliche Gegenstände sowie Lebensmittelprodukt, das ihn enthält
Récipient pour cadeaux surprise ou similaires et produit alimentaire qui le contient

(43) Date of publication of application: 07.05.2003
(73) Proprietor: SOREMARTEC S.A., 6700 Arlon-Schoppach (BE); Ferrero S.p.A., 12051 Alba (Cuneo) (IT); FERRERO OFFENE HANDELSGESELLSCHAFT m.b.H., 35260 Stadtallendorf (DE)
(72) Inventor: Costantini, Maurizio, 12051 Alba (Cuneo) (IT)
(74) Representative: Rambelli, Paolo

(56) References cited:
- EP-A- 0 951 835
- WO-A-93/00267
- AU-B- 700 480

## Description

The present invention relates to a container for surprise gifts which is intended to be used, for example, for the insertion therein of gift articles, such as small toys, articles of jewellery, necklaces, etc., for example, in hollow food products, such as chocolate eggs and the like.

In particular, the invention relates to a container of the type described in WO-A-93/00267 which comprises two cup-like members which can be connected to each other face to face, in which each member comprises a cap-shaped bottom portion and a skirt portion which is intended to be connected to the skirt portion of the other member.

EP 0 951 835 A describes a container for surprise gifts according to the preamble of claim 1 and comprising two cup-like members both having a respective axially extending flange, which flanges align and abut with one another to form a continuous rib and wherein said flanges have a connecting function.

Containers of the above type have enjoyed great commercial success, particularly in conjunction with food products, but also with packaging for food products of relatively small dimensions of such a type to limit the costs of production and raw materials and, therefore, with low marketing costs which make it attractive for the consumer to purchase.

In view of the consumers for whom the container for surprise gifts is intended, as well as of the nature of the food product with which it is associated, the container must generally comply with precise dimensional requirements.

Since it is a product for children, the container must have a minimum dimension which is greater than a threshold value provided by current regulations.

On the other hand, in terms of the requirements of a commercial nature, it is desirable for the container to have overall dimensions which are relatively small so that it can be included in hollow articles of small dimensions and, therefore, of low cost.

Currently available containers comply with the requirements imposed for minimum dimensions; however, it is desirable, and constitutes an objective of the invention, to provide an improved container which - owing to the shape thereof - also deters attempted handling with the mouth and which is intrinsically safe, without substantially affecting the general overall dimensions of the container.

Another objective of the invention is to provide an improved container which can be produced by making modifications to conventional moulds.

In view of those objectives, the subject-matter of the invention is a container of the type mentioned in the introduction of the present description, which is characterized in that at least one of the cup-like members, and preferably both of the cup-like members, forming the container comprise(s), in the cap-shaped portion thereof, a plurality of fins with a sharp appearance which protrude from the cap-shaped surface.

Further, preferred embodiments are disclosed in dependent claims 2 to 10.

The invention will now be described, purely by way of nonlimiting example, with reference to the appended drawings in which:
- Fig. 1 is a general perspective view of a container according to the invention in the closed condition,
- Fig. 2 illustrates the structure of a second embodiment of the container in the open condition,
- Fig. 3 is a top view of the container in Fig. 2,
- Fig. 4 illustrates a container according to the invention, inserted inside a hollow article, such as, for example, a chocolate egg, and
- Fig. 5 is a sectional view according to the line IV-IV in Fig. 3.

A container which is intended to be used, for example, for the insertion of a small toy, an article of jewellery or the like (that is to say, a so-called "surprise gift") inside a hollow article, is generally denoted 1 in the drawings.

The term "hollow article" is intended to include not only food products, such as, for example, a chocolate egg, but also packaging for food products, such as, for example, containers of plastics materials which are provided with a cavity intended to receive the container of the invention and with one or more further cavity(ies) containing food products.

According to the solution known *per se,* the container 1 substantially comprises two cup-like members or shells 2, of moulded plastics material, which are intended to be connected to each other face to face, using to that end the presence on one of the shells of a cylindrical collar 3 which is intended to be inserted inside the opening portion 4 of the other shell.

In order to promote a secure connection between the two shells, an annular rib 5 is provided on the outer surface of the collar 3, which rib 5 is intended to snap-engage with a corresponding groove (not visible in the drawings) which is also annular and which is provided on the internal wall of the opening portion 4 of the other shell 2.

Each shell has a cap-shaped end or bottom portion 6 of generally hemispherical shape, preferably with the exception of a small flattened polar zone 7, as well as a body or skirt portion 8. The skirt portion 8 usually has a generally cylindrical shape; however, there can also be provided rounded skirt portions with a convex profile adjoining the cap-shaped portion.

By way of indication from a dimensional point of view (with reference to an embodiment which must not, however, be understood in a limiting sense), the cap-shaped portions 6 have a radius in the order of approximately 17 mm, which defines - for the diameter of the base of the cap - a value of approximately 34-34.5 mm which complies with the threshold values required by the present regulations in force for articles intended to be handled by children.

However, with regard to the relative heights of the caps and the skirt portions 8, a preferred solution is to provide an overall height of each shell (excluding the collar 3 for the portion provided therewith) in the order of approximately 23-24 mm, of which approximately ¾ of each shell is taken up by the cap-shaped portion.

According to the inventive feature of the invention, at least one of the two cup-like members 2, but preferably both, have a plurality of fins 9 which protrude from the surface of the cap-shaped portion 6. There are preferably from three to six of these fins which are preferably angularly equidistant.

In the preferred embodiment illustrated, the fins 9 extend in substantially axial planes and preferably have a substantially triangular configuration.

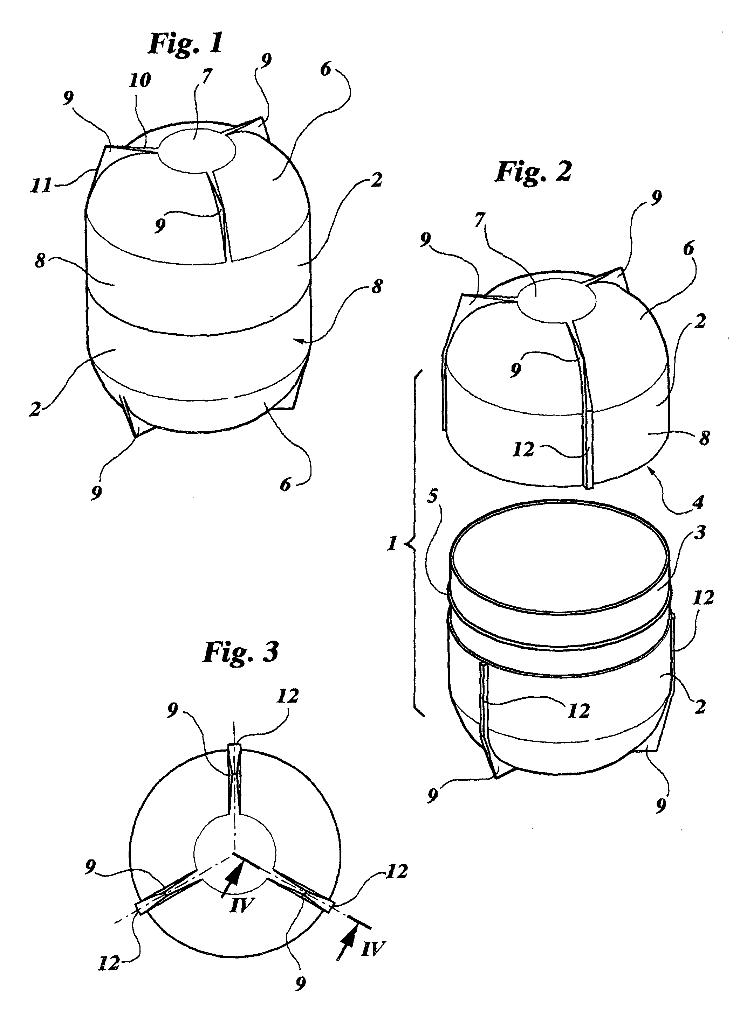

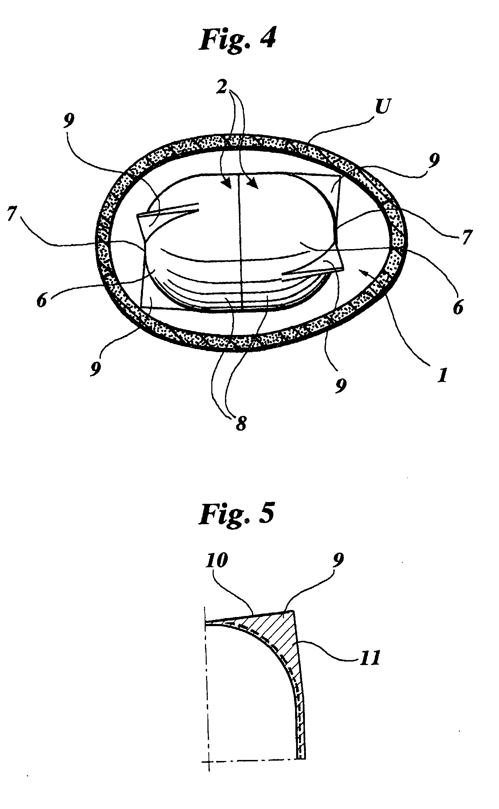

According to a first embodiment which is illustrated in Figures 1 and 4, the axial extent of the fins is limited to the cap-shaped region and the profile of each fin is such that the fin- with regard to its radial extent - does not protrude beyond the maximum diameter of the container, so that the presence of the fins does not bring about an increase in the radial dimensions of the container.

For example, each fin can be defined by substantially straight sides 10 and 11 which intersect to form an acute or obtuse angle, the configuration at an obtuse angle currently being preferred. It will be appreciated, however, that the profile of each fin can also be defined by a substantially continuous arcuate line.

According to the embodiment in Figures 2, 3 and 5, at least one of the fins, or all of the fins, extend(s) axially at least in portions of the region of the skirt 8, forming longitudinal webs or ribs 12 which protrude slightly in a radial manner from the surface of the skirt.

The ribs 12 fulfil in particular the function of reinforcing the container as well as the function of promoting gripping on the part of the consumer when opening and disconnecting the two shells.

The axial extent of the fin in an outward direction is preferably such that it protrudes slightly or is flush with the axial end of each respective cap with which it is associated.

The extent in a circumferential sense (thickness) of each fin is generally limited, for example, to a value of approximately from 0.2 to 2 mm, so long as the fin does not become sharp.

During industrial production of the container, the configuration of the fins can be selected - also depending on the plastics materials used for the container - so that the fins have a sharp appearance and are further able to produce at least an unpleasant or irritating sensation should the container or one of the two cup-like members of the container happen to be introduced into the mouth and come into contact with the walls of the mouth or of the groove; it will be appreciated, however, that the fins should clearly be prevented from having any cutting or tearing effect on the tissues.

The advantages of the container according to the invention are determined by the following aspects.

Firstly, it can be considered that the presence of the fins of sharp appearance has a psychological effect which deters the use of the mouth and of the teeth for opening the container.

The cutting sensation, or the sensation which is at least unpleasant or irritating, which would be perceived should the container accidentally happen to be introduced into the mouth acts as a deterrent to swallowing. It should further be considered that the greater friction generated by the fins provides a possibility of getting stuck.

The presence of the fins brings about an increase in the rigidity of the container and of each cup-like member with which the fins are associated, limiting the possibility of deformation.

Not least, in particular when the fins extend in the manner of longitudinal ribs, they act as gripping and/or stopping elements for the fingers, facilitating the opening of the container by hand and thereby avoiding the tendency to use the mouth and the teeth in order to open it.

In the industrial production of the container, it will be possible to use plastics materials which are in use conventionally. Furthermore, currently available moulding dies will be able to be readily adapted to obtain the new configuration, for example, with simple electrical discharge machining processes, in order to define, in the moulding cavity, cavities which correspond to the dimensions desired for the fins.

Furthermore, the container according to the invention does not involve any modifications to the conventional methods of use. In general, the container is initially made up by inserting the so-called surprise gift into one of the shells (usually the one provided with the collar), then closing the receptacle by snap-fitting the other shell to the shell which has received the surprise gift.

At this point, the container can be inserted inside a hollow article such as, for example, a chocolate egg U (Fig. 4). Since the solution according to the invention does not generally involve an increase in the general overall external dimensions or a reduction in the volume of the internal cavity available for the introduction of the surprise gift, the container lends itself to use with the same hollow articles with which it is generally associated and with the same type of surprise gift generally in use.

## Claims

1. Container for surprise gifts and similar articles intended to be inserted into hollow bodies (1), comprising two cup-like members (2) which can be connected to each other (3, 5) face to face, in which each cup-like member (2) comprises a cap-shaped bottom portion (6) and a skirt portion (8) which is intended to be connected to the skirt portion (8) of the other cup-like member (2), **characterized in that** at least one of the two cup-like members (2) has, in the cap-shaped portion (6) thereof, a plurality of fins (9) with a sharp appearance which protrude from the cap-shaped surface.

2. Container according to claim 1, **characterized in that** the profile of each fin (9) is such that the fin (9), in the radial extent thereof, does not protrude beyond the maximum diameter of the container.

3. Container according to claim 1, **characterized in that** at least one of the plurality of fins (9) extends axially into the region of the skirt (8), forming a longitudinal web (12) which protrudes radially from the surface of the skirt.

4. Container according to any one of claims 1 to 3, **characterized in that** the profile of each fin (9) is such that the fin (9), in the axial extent thereof, protrudes from or is flush with the axial end of the cap (6) with which it is associated.

5. Container according to any one of claims 1 to 4, **characterized in that** each fin (9) is of substantially triangular form.

6. Container according to any one of claims 1 to 4, **characterized in that** the external profile of each fin (9) is defined by two sides (10, 11) which intersect to form an angle.

7. Container according to any one of claims 1 to 6, **characterized in that** the fins (9) are arranged in axial planes.

8. Container according to any one of claims 1 to 7, **characterized in that** the fins (9) are provided on both of the cup-like members (2).

9. Container according to any one of claims 1 to 8, **characterized in that** there are from three to six fins for each cup-like member (2) with which they are associated.

10. Hollow food product, including a container according to any one of claims 1 to 9.

## Patentansprüche

1. Behälter für Überraschungsgeschenke und ähnliche Gegenstände, der dazu gedacht ist, in Hohlkörper (1) eingelegt zu werden, umfassend zwei schalenähnliche Elemente (2), die einander zugewandt miteinander (3, 5) verbunden werden können, wobei jedes schalenähnliche Element (2) einen kappenförmigen Bodenabschnitt (6) und einen Schürzenabschnitt (8) umfasst, der dazu gedacht ist, mit dem Schürzenabschnitt (8) des anderen schalenähnlichen Elements (2) verbunden zu werden, **dadurch gekennzeichnet, dass** wenigstens eines der schalenähnlichen Elemente (2) in dem kappenförmigen Abschnitt (6) davon mehrere Rippen (9) mit einem scharfen Erscheinungsbild aufweist, die von der kappenförmigen Fläche vorragen.

2. Behälter nach Anspruch 1, **dadurch gekennzeichnet, dass** das Profil jeder Rippe (9) derart gestaltet ist, dass die Rippe (9) in ihrer radialen Erstreckung nicht über den maximalen Durchmesser des Behälters vorragt.

3. Behälter nach Anspruch 1, **dadurch gekennzeichnet, dass** sich wenigstens eine der mehreren Rippen (9) axial in den Bereich der Schürze (8) erstreckt und einen Längssteg (12) bildet, der radial von der Oberfläche der Schürze vorragt.

4. Behälter nach einem der Ansprüche 1 bis 3, **dadurch gekennzeichnet, dass** das Profil jeder Rippe (9) derart gestaltet ist, dass die Rippe (9) in ihrer axialen Erstreckung von dem axialen Ende der Kappe (6), der sie zugeordnet ist, vorragt oder damit fluchtet.

5. Behälter nach einem der Ansprüche 1 bis 4, **dadurch gekennzeichnet, dass** jede Rippe (9) eine im wesentlichen dreieckige Form aufweist.

6. Behälter nach einem der Ansprüche 1 bis 4, **dadurch gekennzeichnet, dass** das Außenprofil jeder Rippe (9) durch zwei Seiten (10, 11) definiert ist, die einander schneiden, um einen Winkel zu bilden.

7. Behälter nach einem der Ansprüche 1 bis 6, **dadurch gekennzeichnet, dass** die Rippen (9) in axialen Ebenen angeordnet sind.

8. Behälter nach einem der Ansprüche 1 bis 7, **dadurch gekennzeichnet, dass** die Rippen (9) auf beiden schalenähnlichen Elementen (2) vorgesehen sind.

9. Behälter nach einem der Ansprüche 1 bis 8, **dadurch gekennzeichnet, dass** zwischen drei und sechs Rippen für jedes schalenähnliche Element (2), dem sie zugeordnet sind, vorgesehen sind.

10. Hohles Lebensmittelprodukt, umfassend einen Behälter gemäß einem der Ansprüche 1 bis 9.

## Revendications

1. Récipient pour cadeaux surprise et articles similaires destiné à être inséré dans des corps creux (1), comprenant deux éléments en forme de gobelet (2) qui peuvent être connectés l'un à l'autre (3, 5) face à face, dans lequel chaque élément en forme de gobelet (2) comprend une partie inférieure en forme de capsule (6) et une partie jupe (8) qui est destinée à être connectée à la partie jupe (8) de l'autre élément en forme de gobelet (2), **caractérisé en ce qu'**au moins l'un des deux éléments en forme de gobelet (2) comporte, dans sa partie en forme de capsule (6), plusieurs ailettes (9) d'apparence tranchante qui font saillie sur la surface en forme de capsule.

2. Récipient selon la revendication 1, **caractérisé en ce que** le profil de chaque ailette (9) est tel que l'ailette (9), dans son étendue radiale, ne fait pas saillie au-delà du diamètre maximal du récipient.

3. Récipient selon la revendication 1, **caractérisé en ce qu'**au moins l'une des ailettes (9) s'étend axialement dans la région de la jupe (8), en formant une nervure longitudinale (12) qui fait saillie radialement depuis la surface de la jupe.

4. Récipient selon l'une quelconque des revendications 1 à 3, **caractérisé en ce que** le profil de chaque ailette (9) est tel que l'ailette (9), dans son étendue axiale, fait saillie sur ou bien est à niveau avec l'extrémité axiale de la capsule (6) à laquelle elle est associée.

5. Récipient selon l'une quelconque des revendications 1 à 4, **caractérisé en ce que** chaque ailette (9) est de forme sensiblement triangulaire.

6. Récipient selon l'une quelconque des revendications 1 à 4, **caractérisé en ce que** le profil externe de chaque ailette (9) est défini par deux côtés (10, 11) qui se coupent pour former un angle.

7. Récipient selon l'une quelconque des revendications 1 à 6, **caractérisé en ce que** les ailettes (9) sont agencées dans des plans axiaux.

8. Récipient selon l'une quelconque des revendications 1 à 7, **caractérisé en ce que** les ailettes (9) sont prévues sur les deux éléments en forme de gobelet (2).

9. Récipient selon l'une quelconque des revendications 1 à 8, **caractérisé en ce qu'**il y a de trois à six ailettes pour chaque élément en forme de gobelet (2) auquel elles sont associées.

10. Produit alimentaire creux, incluant un récipient conforme à l'une quelconque des revendications 1 à 9.
